**Europäisches Patentamt**

**European Patent Office**

**Office européen des brevets**

(19)

(11) Veröffentlichungsnummer: **0 126 263**
**B1**

(12)

# EUROPÄISCHE PATENTSCHRIFT

(45) Veröffentlichungstag der Patentschrift:
**10.12.86**

(21) Anmeldenummer: **84103936.5**

(22) Anmeldetag: **09.04.84**

(51) Int. Cl.⁴: **B 62 D 49/08**

(54) **Vorrichtung zum wahlweisen An- und Abkuppeln eines die Frontseite eines Ackerschleppers belastenden Zusatzgewichtes.**

(30) Priorität: **22.04.83 DE 3314684**

(43) Veröffentlichungstag der Anmeldung:
**28.11.84 Patentblatt 84/48**

(45) Bekanntmachung des Hinweises auf die Patenterteilung:
**10.12.86 Patentblatt 86/50**

(84) Benannte Vertragsstaaten:
**AT CH DE FR GB IT LI SE**

(56) Entgegenhaltungen:
**AT - A - 221 955**
**DE - B - 2 059 208**
**DE - C - 804 269**
**US - A - 3 595 410**

(73) Patentinhaber: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Carstensen, Jes, Dipl.-Ing.,**
**Gregor-Vosen-Strasse 44, D-5042 Erftstadt (DE)**

## Beschreibung

Die Erfindung bezieht sich auf eine Vorrichtung zum wahlweisen An- und Abkuppeln eines die Frontseite eines Ackerschleppers belastenden Zusatzgewichtes, das mittels einer Hubvorrichtung und zumindest zweier gleichachsiger Kuppelzapfen in eine angehobene Ankuppelstellung bringbar ist.

Bei einer Vorrichtung der in Rede stehenden Gattung (DE-A-2 059 208) werden Zusatzgewichte von einer als frontseitige Dreipunkthydraulik ausgebildeten Hubvorrichtung des Ackerschleppers in eine angehobene Ankuppelstellung bewegt. Sie sind in dieser Lage nicht formschlüssig verriegelt, sondern sie werden vom Hydraulikzylinder der Dreipunkthydraulik in der Ankuppelstellung gehalten. Wegen des hohen Anschaffungspreises und der beschränkten Anwendungsmöglichkeiten der frontseitigen Dreipunkthydraulik ist die überwiegende Zahl der Ackerschlepper in allen Leistungsbereichen nicht mit dieser Hubvorrichtung ausgerüstet. Weiterhin ist von Nachteil, dass sich aufgrund der erforderlichen Abmessungen einer derartigen Dreipunktaufhängung die Gesamtlänge des Ackerschleppers bei angebauten Zusatzgewichten in unerwünschter Weise erhöht.

Der Erfindung liegt daher die Aufgabe zugrunde, die vorstehend beschriebenen Nachteile zu vermeiden und somit eine Vorrichtung zum wahlweisen An- und Abkuppeln von Zusatzgewichten zu schaffen, die an allen Standardackerschleppern ohne zusätzlichen baulichen Aufwand verwendbar ist und allen Sicherheitsvorschriften gerecht wird.

Diese Aufgabe wird an einer Vorrichtung der in Rede stehenden Gattung mit den Merkmalen des kennzeichnenden Teils des Anspruchs 1 gelöst.

Durch die Anordnung zweier weiterer gleichachsiger Kuppelzapfen an dem Zusatzgewicht und zweier in unterschiedlichen horizontalen Ebenen liegenden Schnellkupplern an der Frontseite des Ackerschleppers wird die Möglichkeit geschaffen, durch Zusammenwirken ersterer Kuppelzapfen mit den unteren Schnellkupplern in einer Schwenkbewegung des Zusatzgewichtes um 90° die letztgenannten Kuppelzapfen in eine Eingriffstellung an den oberen Schnellkupplern zu bringen. In dieser Lage befindet sich das Zusatzgewicht in der angehobenen Stellung, in der es den Ackerschlepper ballastiert. Die Verschwenkbewegung wird am Zusatzgewicht durch das sich einerseits am Zusatzgewicht und andererseits am Boden angreifende Stützelement eingeleitet. Der Ackerschlepper muss daher keine besondere, kostspielige Hubvorrichtung aufweisen; stattdessen ist das baulich einfach ausgebildete Stützelement unmittelbar am Zusatzgewicht befestigt. Die an der Frontseite des Ackerschleppers vorgesehenen Schnellkuppler bieten darüber hinaus auch die Möglichkeit zur Anbringung einer vorderen Zug- oder Drückeeinrichtung. Dabei soll die Zug- oder Drückeeinrichtung auf einer Platte befestigt sein, die seitliche Kuppelzapfen aufweist, welche in den oberen und unteren Schnellkupplern befestigt werden können.

In weiterer Ausgestaltung der Erfindung soll das Stützelement stangenartig ausgebildet sein und einen profilierten Stützfuss aufweisen. Dieser Stützfuss verkrallt sich bei Rückwärts- oder Vorwärtsfahrt des Ackerschleppers im Boden und verbleibt trotz Weiterfahrt des Ackerschleppers in seiner ortsfesten Lage. Das Stützelement kann an seinem unteren Ende aber auch eine Anschlussmöglichkeit für ein Seil oder eine Kette aufweisen, die zwischen demselben und einem bodenfesten Element (Pfahl, in den Boden einbetonierten Ring usw.) befestigt wird. Diese Möglichkeit ist insbesondere dann vorzusehen, wenn das Zusatzgewicht überwiegend in einer betonierten Schleppergarage oder auf einem asphaltierten Hof montiert und demontiert werden soll.

Andererseits kann das Stützelement aber auch nockenartig ausgebildet sein, wobei es über eine Achse am Zusatzgewicht angreift und über eine profilierte Oberfläche aus einer Stellung kleinster Nockenerhebung in eine Stellung höchster Nockenerhebung, die ein Verschwenken des Zusatzgewichtes bewirkt, während der Rückwärtsfahrt des Schleppers bewegt wird.

Zur Erzielung eines möglichst grossen Bodendrucks des profilierten Stützfusses des stangenartigen Stützelementes bzw. der profilierten Nockenoberfläche ist das Stützelement so am Zusatzgewicht anzubringen, dass bei auf dem Boden abgesenkten Zusatzgewicht der grösste Teil des Gewichts auf dem Stützfuss oder auf der profilierten Nockenoberfläche lastet, so dass sich bei Rückwärts- oder Vorwärtsfahrt des Ackerschleppers mit Sicherheit die Lage des Stützelementes gegenüber dem ersten Ankuppelpunkt verändert.

Von besonderem Vorteil für den Transport des Zusatzgewichtes in der angehobenen Stellung ist die Möglichkeit des Einschiebens oder Einschwenkens des Stützelementes, so dass dieses während der Fahrt mit dem Ackerschlepper nicht mehr aus der Aussenkontur des Zusatzgewichtes hervorragt. Auch kann der Vorgang des Verschwenkens dadurch erleichtert werden, wenn auf dem ersten Kuppelzapfen Drehhülsen angeordnet sind. Eine Verwendung der erfindungsgemässen Vorrichtung bei einem aus scheibenförmigen Einzelgewichten bestehenden Zusatzgewicht kann dann erfolgen, wenn die Einzelgewichte in ein Rahmengestell eingehängt sind, das die entsprechenden Kuppelzapfen aufweist.

Zur Verhinderung von Unfällen bei dem An- bzw. Abkuppeln des Zusatzgewichtes und während des anschliessenden Transports sowie für eine bequeme Anbringung kann der Schnellkuppler mit Sicherungselementen versehen sein, die ein unbeabsichtigtes Öffnen derselben verhindern und können die Schnellkuppler vom Fahrerstand des Ackerschleppers aus fernbedienbar sein.

Zur weiteren Erläuterung der Erfindung wird auf die Zeichnung verwiesen, in der zwei Ausführungsbeispiele vereinfacht dargestellt sind. Es zeigen:

Fig. 1 eine Vorderansicht eines Ackerschleppers mit auf den Boden abgesenktem Zusatzgewicht,

Fig. 2 eine Seitenansicht des in Fig. 1 dargestellten Ackerschleppers,

Fig. 3 einen Querschnitt gemäss der Linie III-III durch das Zusatzgewicht in Fig. 1 und

Fig. 4 den vorderen Abschnitt des Ackerschleppers nach Fig. 2 mit angehobenem Zusatzgewicht.

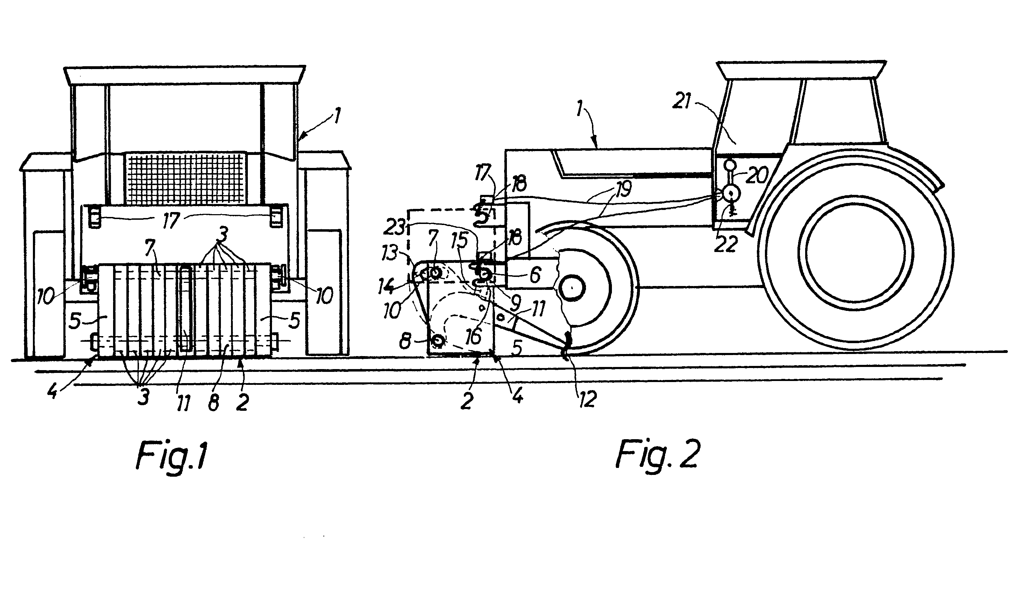

In den Figuren 1, 2 und 3 ist, soweit dargestellt, mit 1 ein Ackerschlepper bezeichnet, an dessen Frontseite ein auf dem Boden ruhendes Zusatzgewicht 2 in angehobener Stellung angekuppelt werden soll. Das Zusatzgewicht 2 besteht aus einer Anzahl von scheibenförmigen Einzelgewichten 3, die in ein Rahmengestell 4 in der der gewünschten Belastung entsprechenden Menge einhängbar sind. Das Rahmengestell 4 besteht aus Endplatten 5, die über Wellen 6, 7 und 8, einen Zwischenraum bildend, aneinander befestigt sind. Dabei stehen die Enden der Welle 6 über die Endplatten 5 vor und bilden auf diese Weise ein erstes Kuppelzapfenpaar 9. Die in gleicher horizontaler Ebene zur Welle angeordnete Welle 7 steht ebenfalls über die Endplatten 5 vor und dient auf diese Weise an ihren Enden als zweites Kuppelzapfenpaar 10. Auf der Welle 8 ist mittig zwischen den Endplatten 5 und somit zu den eingehängten Einzelgewichten 3 ein stangenartiges Stützelement 11 schwenkbar angeordnet, das einerseits einen profilierten in den Boden eingreifenden Stützfuss 12 aufweist, von diesem aus tangential zur Welle 8 verläuft und im Bereich der Welle 8 zu dieser hin bzw. in Richtung Boden abgewinkelt ist. Am Stützelement 11 ist weiterhin eine Lasche 13 befestigt, die mittels eines kreisbogenförmig zur Achse der Welle 8 verlaufenden Langloches 14 auf der Welle 7 geführt ist. Das Stützelement 11 liegt derart an einem vorspringenden Widerlager 15, das auf der Welle 6 befestigt ist, an, dass zumindest ein Teil der Kraft des Zusatzgewichtes 2 auf den Stützfuss 12 übertragen wird.

Der Ackerschlepper 1 weist an seiner Frontseite zwei untere Schnellkuppler 16 sowie mit einem vertikalen Abstand, der dem Abstand der Kuppelzapfenpaare 9 und 10 entspricht, zwei obere Schnellkuppler 17 auf. Die Schnellkuppler 16 und 17 sind jeweils mit Riegeln 18 versehen, die über Bowdenzüge 19 mittels einer Fernbedienung 20, die auf dem Fahrerstand 21 angeordnet ist, jeweils einzeln fernbedienbar sind. Die Fernbedienung wird mittels eines als Raste ausgebildeten Sicherungselementes 22 in einer Stellung verriegelt, in der alle Schnellkuppler 16 und 17 geschlossen sind. Darüber hinaus besteht aber auch die Möglichkeit Sicherungselemente direkt an den Schnellkupplern vorzusehen. Auf dem ersten Kuppelzapfenpaar 9 des Zusatzgewichtes 2 ist eine Drehhülse 23 angeordnet.

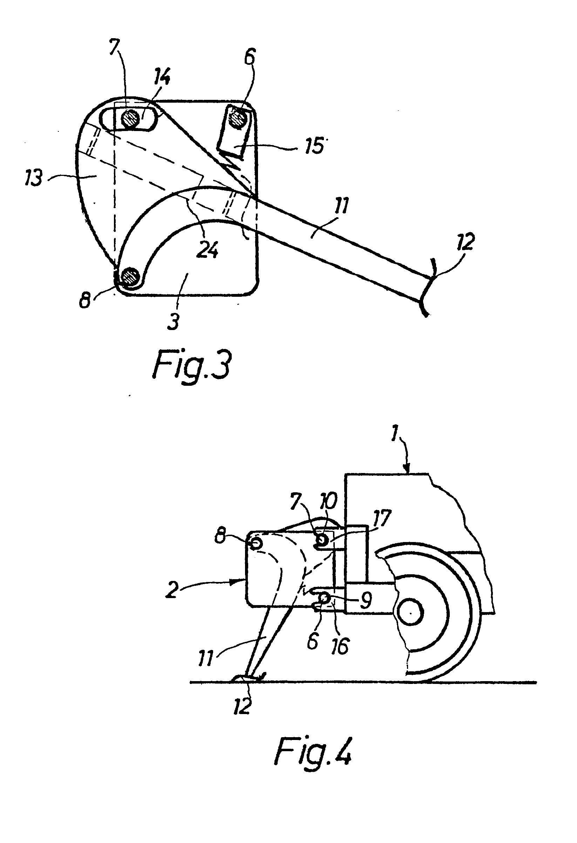

Weitere Einzelheiten über die Anordnung des Stützelementes 11 am Zusatzgewicht 2 können der Fig. 3 entnommen werden. Zusätzlich zu der bereits beschriebenen Ausbildung des Stützelementes 11 ist in der Fig. 3 zu erkennen, dass die Baueinheit Lasche 13 - Stützelement 11 teleskopartig ausgebildet ist, d.h., dass der gerade Abschnitt des Stützelementes 11 in eine Bohrung 24 in der Lasche 13 einschiebbar ist.

Das Ankuppeln des Zusatzgewichtes 2 an den Ackerschlepper 1 wird mit der erfindungsgemässen Vorrichtung in folgender Weise durchgeführt:

Der Ackerschlepper 1 wird an das auf dem Boden ruhende Zusatzgewicht 2 durch Vorwärtsfahrt heranbewegt, bis das erste Kuppelzapfenpaar 9 mit seinen Drehhülsen 23 in die unteren Schnellkuppler 16 einrastet (vgl. Fig. 1 und 2). Bei anschliessender Rückwärtsfahrt des Ackerschleppers 1 stützt sich das Stützelement 11 mittels seines Stützfusses 12 derart auf dem Boden ab, dass das Zusatzgewicht 2 um 90° in die durch gestrichelte Linien in Fig. 2 dargestellte Position verschwenkt wird, in der das weitere Kuppelzapfenpaar 10 in die oberen Schnellkuppler 17 einrastet. Diese Stellung des Zusatzgewichtes 2 ist auch in der Fig. 4 dargestellt. Anschliessend wird das Stützelement 11 so weit in die Bohrung 24 eingeschoben, dass es nicht mehr über die Aussenkontur des Zusatzgewichtes 2 vorsteht. Eine Entlastung des Stützelementes 11 zum leichteren Einschieben in die Bohrung 24 kann ggf. dadurch erreicht werden, dass der Ackerschlepper 1 um wenige Zentimeter vorwärts rollt. Gegebenenfalls kann es sich auch als zweckmässig erweisen, zwischen dem Widerlager 15 und dem Stützelement 11 eine Druckfeder vorzusehen. Der Abbau des Zusatzgewichtes 2 vom Ackerschlepper 1 geschieht durch Umkehrung des vorbeschriebenen Verfahrens, d.h. der Stützfuss 12 wird auf den Boden gesenkt, vom Fahrerhaus 21 aus werden die oberen Schnellkuppler 17 gelöst, so dass sich bei Vorwärtsfahrt des Ackerschleppers 1 das Zusatzgewicht 2 auf den Boden absenkt.

**Patentansprüche**

1. Vorrichtung zum wahlweisen An- und Abkuppeln eines die Frontseite eines Ackerschleppers belastenden Zusatzgewichtes, das mittels einer Hubvorrichtung (11) und zumindest zweier gleichachsiger Kuppelzapfen (9) in eine angehobene Ankuppelstellung bringbar ist, dadurch gekennzeichnet, dass das auf dem Boden ruhende Zusatzgewicht (2) in seinem oberen Bereich mit Abstand zu den gleichachsigen Kuppelzapfen (9), vorzugsweise in einer horizontalen Ebene zu diesen liegend, zwei weitere Kuppelzapfen (10) aufweist, dass an der Frontseite des Ackerschleppers (1), bei Vorwärtsfahrt in erstgenannte Kuppelzapfen (9) des auf dem Boden ruhenden Zusatzgewichtes (2) einrastende Schnellkuppler (16) angeordnet sind, wobei das Kuppelzapfenpaar (9) in den Schnellkupplern (16) drehbar geführt ist, dass bei Verschwenken des Zusatzgewichtes (2) um etwa 90° das weitere Kuppelzapfenpaar (10) in obere Schnellkuppler (17) einrastet und dass die Hubvorrichtung als einerseits an dem Zusatzgewicht (2) und andererseits am Boden angreifendes Stützelement (11) ausgebildet ist, das bei Vorwärts- oder Rückwärtsfahrt des Ackerschleppers (1) letztere Kuppelzapfen (10) in die oberen Schnellkuppler (17) verschwenkt.

2. Vorrichtung nach Anspruch 1, dadurch gekennzeichnet, dass das Stützelement (11) stangenartig ausgebildet ist und einen profilierten Stützfuss (12) aufweist.

3. Vorrichtung nach Anspruch 1, dadurch gekennzeichnet, dass das Stützelement nockenartig ausgebildet ist.

4. Vorrichtung nach einem der vorhergehenden Ansprüche, dadurch gekennzeichnet, dass das auf dem Boden ruhende Zusatzgewicht (2) das Stützelement (11) belastet.

5. Vorrichtung nach einem der vorhergehenden Ansprüche, dadurch gekennzeichnet, dass das Stützelement (11) bei angehobenem Zusatzgewicht (2) in dasselbe einschwenkbar oder einschiebbar ist.

6. Vorrichtung nach einem der vorhergehenden Ansprüche, dadurch gekennzeichnet, dass auf ersterem Kuppelzapfenpaar (9) Drehhülsen (23) angeordnet sind.

7. Vorrichtung nach einem der vorhergehenden Ansprüche, dadurch gekennzeichnet, dass das Zusatzgewicht (2) aus in ein Rahmengestell (4) eingehängten scheibenförmigen Einzelgewichten (3) besteht, wobei an dem Rahmengestell (4) die Kuppelzapfen (9, 10) angeordnet sind.

8. Vorrichtung nach einem der vorhergehenden Ansprüche, dadurch gekennzeichnet, dass die Schnellkuppler (16, 17) von dem Fahrerstand (21) des Ackerschleppers (1) aus fernbedienbar sind.

9. Vorrichtung nach einem der vorhergehenden Ansprüche, dadurch gekennzeichnet, dass die Schnellkuppler (16, 17) und/oder die Fernbedienung (20) mit Sicherungselementen (22) versehen sind, die ein unbeabsichtigtes Öffnen derselben verhindern.

## Claims

1. An arrangement for selectively coupling or uncoupling an additional ballast weight to or from the front end of a tractor, the weight serving to weight the tractor's front end and being movable into the coupled position — into which it is lifted — by means of a lifting device (11) and at least two primary coaxial coupling pins (9), characterized in that the ballast weight (2) which prior to being coupled rests on the ground is provided in its upper part with two secondary coupling pins (10) spaced from yet, preferably, located in the same horizontal plane as the primary coaxial coupling pins (9), that the front end of the tractor (1) is provided with quick-acting couplers (16) which, when the tractor moves forward to the ballast weight (2) resting on the ground, engage the primary coupling pins (9), that each of the pair of pirmary coupling pins (9) when thus engaged is swivably held in a respective one of the quick-acting couplers (16), that, when the ballast weight (2) is thus swivelled through an angle of substantially 90°, each of the pair of secondary coupling pins (10) engages a respective one of upper quick-acting couplers (17) also provided on the tractor's front end, and in that the lifting device is constructed as a support (11) which, on the one hand, moves the ballast weight (2) and, on the other hand, grips the ground and which is arranged to swivel the secondary coupling pins (10) into the upper couplers (17) during the tractor's (1) forward or reverse motion.

2. An arrangement according to claim 1, characterized in that the support (11) is rod-shaped and is provided with a profiled support foot (12).

3. An arrangement according to claim 1, characterized in that the support is cam-shaped.

4. An arrangement according to any of the preceding claims, characterized in that the ballast weight (2), when resting on the ground, weights the support (11).

5. An arrangement according to any of the preceding claims, characterized in that the support (11) is tiltable or insertable into the ballast weight (2) after the latter has been lifted.

6. An arrangement according to any of the preceding claims, characterized in that a turn sleeve (23) is arranged on each of the pair of primary coupling pins (9).

7. An arrangement according to any of the preceding claims, characterized in that the ballast weight (2) comprises a number of individual, plate-shaped, weights (3) suspended in a frame (4), and in that the coupling pins (9, 10) are arranged on the frame (4).

8. An arrangement according to any of the preceding claims, characterized in that the quick-acting couplers (16, 17) are operable by remote control from the tractor's (1) cab (21).

9. An arrangement according to any of the preceding claims, characterized in that the quick-acting couplers (16, 17) and/or the remote control appliance (20) is, or are, provided with safety elements (22) for preventing them from being unintentionally detached from one another.

## Revendications

1. Dispositif pour accoupler et désaccoupler à volonté une masse supplémentaire de charge à l'avant d'un tracteur agricole, cette masse étant susceptible d'être amenée dans une position soulevée d'accouplement au moyen d'un dispositif de levage (11) et d'au moins deux axes d'accouplement (9) coaxiaux, dispositif caractérisé en ce que la masse supplémentaire reposant sur le sol (2) comporte, dans sa partie supérieure, à une certaine distance des axes d'accouplement co-axiau (9) se situant de préférence dans un plan horizontal par rapport à ceux-ci, deux autres axes d'accouplement (10), en ce que, à l'avant du tracteur agricole (1) sont disposés des accouplements rapides (16) venant s'encliqueter lors du déplacement en avant du tracteur sur les axes d'accouplement précités (9) de la masse supplémentaire (2) reposant sur le sol, la paire d'axes d'accouplement (9) étant guidés de façon à pouvoir tourner dans les accouplements rapides (16), tandis que, lors du basculement de la masse supplémentaire (2) d'environ 90°, l'autre paire d'axes d'accouplement (10) s'encliquette dans l'accouplement rapide supérieur (17), le dispositif de levage étant constitué d'un élément d'appui (11) venant en prise, d'une part, sur la masse supplémentaire (2) et, d'autre part, sur le sol, et qui lors du dépassement vers l'avant ou vers l'arrière du tracteur agricole (1) fait pivoter les axes d'accouplement mentionnés en dernier lieu (10) dans l'accouplement rapide supérieur (17).

2. Dispositif selon la revendication 1, caractérisé en ce que l'élément d'appui (11) est en forme de barre et comporte un pied d'apui profilé (12).

3. Dispositif selon la revendication 1, caractérisé en ce que l'élement d'appui est réalisé sous forme de came.

4. Dispositif selon une des précédentes revendications, caractérisé en ce que la masse supplémentaire reposant sur le sol (2) charge l'élément d'appui (11).

5. Dispositif selon une des précédentes revendications, caractérisé en ce que l'élément d'appui (11), lorsque la masse supplémentaire (2) est soulevée, est susceptible de pivoter ou bien de coulisser à l'intérieur de cette masse.

6. Dispositif selon une des précédentes revendications, caractérisé en ce que, sur la première paire d'axes d'accouplement (9), sont disposées des douilles rotatives (23).

7. Dispositif selon une des précédentes revendications, caractérisé en ce que la masse supplémentaire (2) est constituée de masses individuelles (3) en forme de plaques suspendues dans un châssis en forme de cadre (4), les axes d'accouplement (9, 10) étant disposés sur ce châssis en forme de cadre (4).

8. Dispositif selon une des précédentes revendications, caractérisé en ce que les accouplements rapides (16, 17) sont susceptibles d'être manoeuvrés à distance, à partir du poste (21) du conducteur du tracteur agricole (1).

9. Dispositif selon une des précédentes revendications, caractérisé en ce que les accouplements rapides (16, 17) et/ou la commande à distance (20) sont munis d'éléments de sécurité (22) qui empêchent une ouverture indésiderable de ces accouplements.

Fig.1

Fig.2

0 126 263

Fig.3

Fig.4